# EUROPÄISCHE PATENTANMELDUNG

(11) **EP 0 660 029 A1**
(43) Veröffentlichungstag der Anmeldung: **28.06.1995**
(21) Anmeldenummer: 94119774.1
(22) Anmeldetag: 14.12.1994
(51) Int. Cl.: F17C 11/00, C10L 3/02

(54) **Verfahren zum Transport von Acetylen**

(30) Priorität: 21.12.1993 DE 4343659
(71) Anmelder: MESSER GRIESHEIM GMBH, D-60547 Frankfurt (DE)
(72) Erfinder: Behringer, Hartmut, D-50374 Erfstadt (DE); Pottkämper, Siegfried, Dr., D-50354 Hürth (DE); Stephan, Hans-Werner, D-50354 Hürth (DE); Marcks, Gerrit, D-12203 Berlin (DE)

(57) **Zusammenfassung**

Bei einem Verfahren zum Transport von Acetylen, welches in einem Lösungsmittel gelöst ist, in einem druckfesten, isolierten Behälter beträgt das Acetylen/Lösungsmittel-Massenverhältnis der Lösung maximal 0,30, wobei die Lösung eine Temperatur von bis zu -55 °C aufweist. Die Oberfläche der Lösung im Behälter ist mit einer mehrlagigen Schicht aus stückigem schwimmfähigem Matarial abgedeckt.

## Beschreibung

Die vorliegende Erdindung betrifft ein Verfahren zum Transport von Acetylen in einem druckfesten, isolierten Behälter, wobei das Acetylen in einem Lösungsmittel gelöst ist.

In der US-PS 2 925 385 wird ein Verfahren zur sicheren Handhabung und Lagerung sowie zum sicheren Transport von Acetylen beschrieben. Danach wird gasförmiges Acetylen in eine Mischung von Flüssigkeiten, welche in der Lage sind, Acetylen schnell aufzulösen, bei Temperaturen von unter -80°C eingebracht und die resultierende Lösung beispielsweise unterhalb einer Temperatur von -76 °C bei Atmosphärendruck gehalten wird.

Schließlich ist aus der DE-OS 34 42 014 bekannt, daß als Lösungsmittel für Acetylen zur Unterdrückung seiner Zerfallsneigung Dimethylformamid verwendet wird.

Nachteilig ist bei dem bekannten Verfahren, daß, das Lösungsmittel zur Aufnahme des gasförmigen Acetylens auf sehr tiefe Temperaturen abgekühlt werden muß und daß auch die Lagertemperatur bei Atmosphärendruck mindestens -76°C betragen muß.

Es ist daher Aufgabe der vorliegenden Erfindung, ein Verfahren zum sicheren Transport von in einem Lösungsmittel gelösten Acetylen anzugeben, bei welchem der Kälteaufwand wesentlich verringert ist. Das wird erfindungsgemäß dadurch erreicht, daß das Acetylen/Lösungsmittel-Massenverhältnis der Lösung maximal 0,30 beträgt, daß die Lösung dabei eine Temperatur von bis zu -55 °C aufweist und daß die Oberfläche der Lösung im Behälter mit einer mehrlagigen Schicht aus stückigem schwimmfähigem Material abgedeckt ist.

Das Verfahren gemäß der Erfindung kann weiterhin wahlweise auch nach dadurch ausgestaltet sein, daß
a) die Oberfläche der Lösung mit einer dreilagigen Schicht aus stückigem schwimmfähigem Material abgedeckt ist;
b) die Stücke aus schwimmfähigem Material in keiner ihrer Dimensionen größer als 30 mm sind;
c) die Stücke Kugeln, vorzugsweise Hohlkugeln, sind;
d) die Kugeln einen Durchmesser von 15 bis 25 mm aufweisen;
e) die Kugeln aus Kunststoff bestehen;
f) als Kunststoff Polypropylen verwendet ist;
g) die Kugeln aus Metall bestahen;
h) als Metall Aluminium verwendet ist;
i) der Gasdruck im Behälter durch Einführung eines Gases mehr als Atmosphärendruck beträgt, wobei das Gas in dem Lösungsmittel für das Acetylen im wesentlichen unlöslich ist und wobei der Acetylen-Partialdruck über der Lösung unmittelbar nach Befüllung des Behälters nicht größer als 0,8 bar ist;
j) der Acetylen-Partialdruck über der Lösung im Betriebszustand auf maximal 1,1 bar ansteigt.

Beim erfindungsgemäßen Verfahren sind Behälter zu verwenden, deren Prüfdruck relativ hoch im Vergleich zum Betriebdruck ist. So sind beispielsweise Behälter mit einem Prüfdruck von 25 bis 30 bar empfehlenswert, wenn der Acetylenpartialdruck über der Lösung betriebsmäßig um 1 bar beträgt.

Beim Verfahren gemäß der Erfindung können als Gase, welche in dem Lösungsmittel, in dem das Acetylen gelöst ist, praktisch unlöslich sind. Inertgase, beispielsweise Stickstoff oder Edelgase, oder brennbare Gase, beispielsweise Wasserstoff oder Kohlenmonoxid, verwendet werden.

Beim erfindungsgemäßen Verfahren ist die Isolierung der Behälter so auszuführen, daß die Temperaturanstiegsgeschwindigkeit der gefüllten Behälter im Normalbetrieb 0,15 K/h nicht übersteigt.

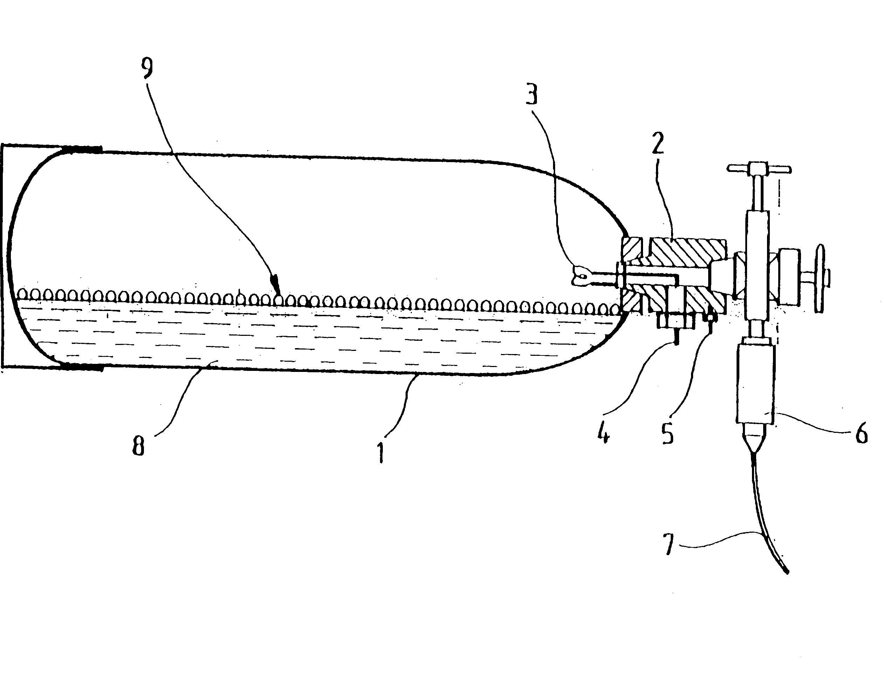

In der beigefügten Zeichnung ist eine Apparatur dargestellt, mit deren Hilfe Explosionsversuche gemäß den folgenden Beispielen ausgeführt wurden.

In eine liegend angeordnete Stahlflasche 1 (Prüfdruck: 60 bar) ist anstelle das üblichen Schließventils ein Zündventil 2 eingeschraubt, welches innerhalb der Stahlflasche 1 eine aus Nickeldraht bestehende Zündwendel 3 aufweist. Die Zündwendel 3 ist über Leitungen (4, 5) mit einer Wechselstromquelle elektrisch leitend verbindbar. In das Zündventil 2 ist in seinem außerhalb der Stahlflasche 1 befindlichen Ende ein elektrischer Druckaufnehmer 6 eingesetzt, dessen Verbindungsleitung 7 zu einem Linienschreiber führt. In der Stahlflasche 1 befindet sich eine Lösung 8 von Acetylen in Dimethylformamid, auf deren Oberfläche sich mindestens eine Schicht von schwimmfähigen Kugeln 9 befindet.

### Beispiel

Es wurden Stahlflaschen 1 (vergl. die beigefügte Zeichnung) mit einem Nutzvolumen von 5,2 und 20,9 l verwendet.

Zur Füllung wurden die Stahlflaschen 1 evakuiert und dann das Lösungsmittel Dimethylformamid eingesaugt. Nach erneutem Abpumpen wurde das Acetylen unter Schütteln eingegeben, wobei die Füllmengen jeweils durch Wägung bestimmt wurden. Der Volumenanteil der Lösung 8 in den Stahlflaschen 1 betrug zwischen 25 und 48 %. Auf die Oberfläche der Lösung 8 waren schwimmfähige Kugeln 9 aus Polypropylen (Durchmesser: 20 mm) entweder einlagig oder dreilagig aufgebracht.

Zur Einstellung des Druckes in den Stahlflaschen 1, bei dem durch die glühende Zündwendel 3 gezündet werden soll, wurden die Flaschen solange entweder in Eiswasser oder in ein mit flüssigem Stickstoff oder festem Kohlendioxid gekühltes Acetonbad gestellt, bis der vorgesehene Druck unterschritten war. Nach Entnahme der Stahlflaschen 1 aus dem Kältebad wurde nach Erreichen des vorgesehenen Druckes gezündet.

In der TABELLE sind die Meßergebnisse wiedergegeben.
In Zeile 1 ist das Massenverhältnis Acetylen/Dimethylformamid angegeben, Zeile 2 enthält die genauen Volumina der verwendeten Stahlflaschen 1, Zeile 3 nennt die Zahl der Kugelschichtungen auf der Lösung 8 und Zeile 4 gibt den Druck vor der Zündung an. Schließlich sind in den Zeilen 5 und 6 die 1. und 2. Druckmaxima aufgeführt.

Das Druck-Zeit-Diagramm zeigte bei den Versuchen 8 und C etwa 3 Sekunden nach der Zündung ein erstes Druckmaximum an, das niedriger war als das zweite Druckmaximum, welches etwa nach 1 Minute nach der Zundung erreicht wurde. Auffällig ist, daß bei drei Schichten van Polypropylenkugeln auf der Oberfläche der Lösung 8 kein 2. Druckmaximum auftritt (vergl. die Versuche A und O).

**TABELLE**

| Versuch | A | B | C | D |
|---|---|---|---|---|
| m_{A}/m_{L} | 0,257 | 0,257 | 0,257 | 0,297 |
| V [l] | 20,9 | 6,2 | 20,9 | 20,9 |
| S | 3 | 1 | 1 | 3 |
| P₀ [bar] | 1,60 | 1,25 | 1,26 | 1,08 |
| P₁ [bar] | 15,4 | 10,6 | 14,0 | 10,1 |
| P₂ [bar] | - | 41,0 | 51,7 | - |

## Patentansprüche

1. Verfahren zum Transport von Acetylen in einem druckfesten, isolierten Behälter, wobei das Acetylen in einem Lösungsmittel gelöst ist, dadurch gekennzeichnet, daß das Acetylen/Lösungsmittel-Massenverhältnis der Lösung maximal 0,30 beträgt, daß die Lösung dabei eine Temperatur von bis zu -55 °C aufweist und daß die Oberfläche der Lösung im Behälter mit einer mehrlagigen Schicht aus stückigem schwimmfähigem Material abgedeckt ist.

2. Verfahren nach Anspruch 1, dadurch gekennzeichnet, daß die Oberfläche der Lösung mit einer dreilagigen Schicht aus stückigem schwimmfähigem Material abgedeckt ist.

3. Verfahren nach Anspruch 1 oder 2, dadurch gekennzeichnet, daß die Stücke aus schwimmfähigem Material in keiner ihrer Dimensionen größer als 3o mm sind.

4. Verfahren nach einem der Ansprüche 1 bis 3, dadurch gekennzeichnet, daß die Stücke Kugeln, vorzugsweise Hohlkugeln, sind.

5. Verfahren nach Anspruch 4, dadurch gekennzeichnet**,** daß die Kugeln einen Durchmesser von 15 bis 25 mm aufweisen.

6. Verfahren nach Anspruch 4 oder 5, dadurch gekennzeichnet, daß die Kugeln aus Kunststoff bestehen.

7. Verfahren nach Anspruch 6, dadurch gekennzeichnet, daß als Kunststoff Polypropylen verwendet ist.

8. Verfahren nach mindestens einem der Ansprüche 1 bis 5, dadurch gekennzeichnet, daß die Kugeln aus Metall bestehen.

9. Verfahren nach Anspruch 8, dadurch gekennzeichnet, daß als Metall Aluminium verwendet ist.

10. Verfahren nach mindestens einem der Ansprüche 1 bis 9, dadurch gekennzeichnet, daß der Gasdruck im Behälter durch Einführung eines Gases mehr als Atmosphärendruck beträgt, wobei das Gas in dem Lösungsmittel für das Acetylen im wesentlichen unlöslich ist und wobei der Acetylen-Partialdruck über der Lösung unmittelbar nach Befüllung des Behälters nicht größer als 0,8 bar ist.

11. Verfahren nach mindestens einem der Anspruche 1 bis 10, dadurch gekennzeichnet, daß der Acetylen-Partialdruck über der Lösung im Betriebszustand auf maximal 1,1 bar ansteigt.
